# EUROPEAN PATENT SPECIFICATION

(11) **EP 3 599 150 B1**
(45) Date of publication and mention of the grant of the patent: **12.08.2020**
(21) Application number: 19179914.7
(22) Date of filing: 13.06.2019
(51) Int. Cl.: B62K 25/28

(54) **STRADDLED VEHICLE**
GRÄTSCHSITZFAHRZEUG
VÉHICULE À ENFOURCHER

(30) Priority: 27.07.2018 JP 2018141404
(43) Date of publication of application: 29.01.2020
(73) Proprietor: YAMAHA HATSUDOKI KABUSHIKI KAISHA, Iwata-shi, Shizuoka 438-8501 (JP)
(72) Inventor: KAWAGUCHI, Tsutomu, Iwata-shi, Shizuoka 438-8501 (JP)
(74) Representative: Grünecker Patent- und Rechtsanwälte PartG mbB

(56) References cited:
- EP-A1- 2 921 394
- EP-A2- 1 457 413
- CN-A- 1 410 313
- JP-A- 2003 104 267
- JP-A- 2010 173 521
- TW-A- 200 714 511

## Description

The present invention relates to a straddled vehicle, and particularly to a straddled vehicle having a unit swing-type engine.

Various types of rear suspensions of motorcycles are known in the art. The unit swing type is widely used in scooter-type motorcycles. With this type, the engine and the transmission are built into a single unit (referred to as a "unit swing-type engine"). A front portion of the unit swing-type engine is swingably supported on the body frame by means of a link member.

A scooter-type motorcycle having a unit swing-type engine is disclosed in Japanese Laid-Open Patent Publication No. 2004-276643 (hereinafter, "Patent Document No. 1"), for example. Document JP 2004-276643 shows the preamble of claim 1.

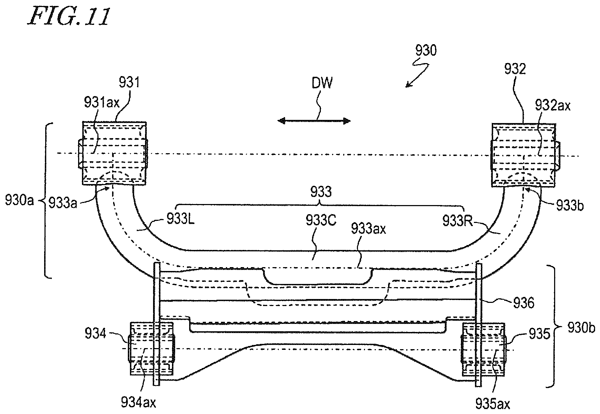

FIG. **11** shows a link member (suspension link) **930** used in the scooter-type motorcycle of Patent Document No. 1.

As shown in FIG. **11****,** the link member **930** includes a body-side link **930a** to be linked to the body frame side, and an engine-side link **930b** to be linked to the unit swing-type engine side.

The body-side link **930a** includes a left head pipe **931,** a right head pipe **932** and a cross pipe **933.**

The left head pipe **931** and the right head pipe **932** are rotatably supported on the frame. The left head pipe **931** and the right head pipe **932** are spaced apart from each other in the vehicle width direction **DW.** The axes (head pipe axes) **931ax** and **932ax** of the left head pipe **931** and the right head pipe **932** extend in the vehicle width direction **DW** and are coaxial with each other.

One end (hereinafter, "the first end") **933a** of the cross pipe **933** is connected to the left head pipe **931,** and the other end (hereinafter, "the second end") **933b** thereof is connected to the right head pipe **932.** The cross pipe **933** includes a central portion **933C,** a left curved portion **933L** and a right curved portion **933R.** The central axis **933ax** of the central portion **933C** is located on the rear side of the head pipe axes **931ax** and **932ax** and extends in the vehicle width direction **DW.** The left curved portion **933L** includes the first end **933a** of the cross pipe **933,** and extends from the central portion **933C** to the left head pipe **931.** The right curved portion **933R** includes the second end **933b** of the cross pipe **933,** and extends from the central portion **933C** to the right head pipe **932.**

The first end **933a** of the cross pipe **933** is welded to the left head pipe **931** so as to be perpendicular to the head pipe axis **931ax** of the left head pipe **931.** The second end **933b** of the cross pipe **933** is welded to the right head pipe **932** so as to be perpendicular to the head pipe axis **932ax** of the right head pipe **932.**

The engine-side link **930b** includes a pair of engine-side pipes **934** and **935** and a connection bracket **936.**

The pair of engine-side pipes **934** and **935** are spaced apart from each other in the vehicle width direction **DW.** The axes **934ax** and **935ax** of the engine-side pipes **934** and **935** extend in the vehicle width direction **DW** and are coaxial with each other.

The connection bracket **936** supports the pair of engine-side pipes **934** and **935** and connects the pair of engine-side pipes **934** and **935** to the cross pipe **933.**

With the link member **930** shown in FIG. **11****,** the cross pipe **933** is attached to the left head pipe **931** and the right head pipe **932** so that the central axis **933ax** is perpendicular to the head pipe axes **931ax** and **932ax** so as to ensure welding margin. Therefore, the left curved portion **933L** and the right curved portion **933R** of the cross pipe **933** are likely to be located on the outer side (i.e., likely to protrude outwardly), thereby imposing limitations on layout and installment of peripheral components and resulting in an insufficient bank angle of the vehicle body.

On the other hand, if the shape of the cross pipe **933** is determined so as to ensure layout and installment of peripheral components or to satisfy the bank angle, the installment interval between the left and right head pipes **931** and **932** may be shortened, resulting in an insufficient torsional rigidity of the link member **930.**

The present invention has been made in view of the above, and an object thereof is to provide a straddled vehicle having a unit swing-type engine, with which it is possible to suppress the outward protrusion of the link member while ensuring the torsional rigidity of the link member that connects together the frame and the unit swing-type engine. According to the present invention said object is solved by a straddled vehicle having features of independent claim 1. Preferred embodiments are laid down in the dependent claims.

A straddled vehicle according to an embodiment is a straddled vehicle including: a frame; a unit swing-type engine; and a link member that connects together the frame and the unit swing-type engine, wherein: the link member includes: a left head pipe rotatably supported on the frame; a right head pipe rotatably supported on the frame; and a cross pipe having a first end thereof connected to the left head pipe and a second end thereof connected to the right head pipe; the left head pipe and the right head pipe are spaced apart from each other in a vehicle width direction, and head pipe axes of the left head pipe and the right head pipe extend in the vehicle width direction and are coaxial with each other; the cross pipe includes: a central portion whose central axis extends in the vehicle width direction at a distance from the head pipe axes; a left curved portion including the first end and extending from the central portion to the left head pipe; and a right curved portion including the second end and extending from the central portion to the right head pipe; and at at least one of the first end and the second end of the cross pipe, a dimension **d2** of the cross pipe in a direction perpendicular to the vehicle width direction is larger than a dimension **d1** thereof in the vehicle width direction, and the central axis of the cross pipe diagonally crosses the head pipe axes.

In one embodiment, each of the left head pipe and the right head pipe includes an inner tube portion and an outer tube portion, and a bush arranged between the inner tube portion and the outer tube portion; and the bush is located on the central axis of the cross pipe.

In one embodiment, a width of the bush of one of the left head pipe and the right head pipe that corresponds to at least one of the first end and the second end of the cross pipe is smaller than a width of the one of the left head pipe and the right head pipe.

In one embodiment, at the at least one of the first end and the second end of the cross pipe, a ratio of the dimension **d2** with respect to the dimension **d1** is 1.2 or more.

In one embodiment, at the at least one of the first end and the second end of the cross pipe, the central axis of the cross pipe is at an angle of 60° or more and 85° or less with respect to the head pipe axes.

In one embodiment, the cross pipe is arranged rightward of a left end of the left head pipe and leftward of a right end of the right head pipe.

In one embodiment, the left curved portion extends leftward from the central portion of the cross pipe toward the left head pipe; and the right curved portion extends rightward from the central portion of the cross pipe toward the right head pipe.

In one embodiment, the straddled vehicle further includes a canister arranged so as to be located between the left head pipe and the right head pipe of the link member.

With the link member of the straddled vehicle according to an embodiment, the central axis of the cross pipe diagonally crosses the head pipe axes at at least one of the first end and the second end of the cross pipe. That is, the left curved portion and/or the right curved portion of the cross pipe are connected diagonally to the respective head pipes. Therefore, as compared with a case where the central axis of the cross pipe is perpendicular to the head pipe axes, i.e., where the left curved portion and/or the right curved portion are connected perpendicular to the respective head pipes, the left curved portion and/or the right curved portion are likely to be located on the inner side (i.e., unlikely to protrude outwardly), thereby improving the degree of freedom with the shape of the cross pipe. This makes it easier to ensure the ease of layout and installment of peripheral components, thereby making it easier to ensure a large installment interval between the left head pipe and the right head pipe and to ensure the torsional rigidity of the link member.

Note that when the left curved portion and/or the right curved portion of the cross pipe are connected diagonally to the respective head pipes, the dimension in the vehicle width direction of the end portion of the cross pipe as projected onto the outer surface of the head pipes increases, and one may think that it may be necessary to also increase the head pipe width. With the link member according to an embodiment, however, the dimension **d2** in the direction perpendicular to the vehicle width direction is larger than the dimension **d1** in the vehicle width direction at at least one of the first end and the second end of the cross pipe. That is, the first end and/or the second end of the cross pipe are deformed (flattened) so that the dimension **d2** is larger than the dimension **d1.** Therefore, it is possible to prevent an increase in the head pipe width even when the left curved portion and/or the right curved portion of the cross pipe are connected diagonally to the respective head pipes. That is, the head pipe width can be made smaller as compared with a case where the first end and/or the second end of the cross pipe are connected diagonally to the head pipes without being deformed (flattened).

Each of the left head pipe and the right head pipe may include a bush arranged between the inner tube portion and the outer tube portion. With the bushes being located on the central axis of the cross pipe, vibrations from the unit swing-type engine can be desirably absorbed by the bushes.

In view of cost and weight reduction, it is preferred that the width of the bushes of the head pipes, to which the cross pipe is connected diagonally, is smaller than the width of the head pipes (i.e., the bushes are offset).

In order to sufficiently prevent an increase in the head pipe width, the ratio of the dimension **d2** with respect to the dimension **d1** at the first end and/or the second end of the cross pipe is preferably 1.2 or more.

In order to reduce the outward protrusion of the left curved portion and/or the right curved portion of the cross pipe, the central axis of the cross pipe is preferably at an angle of 85° or less with respect to the head pipe axes at the first end and/or the second end of the cross pipe. Note however that if the angle of the central axis of the cross pipe with respect to the head pipe axes is less than 60°, it may be difficult to connect (e.g., to weld with a welding torch) the cross pipe to the head pipes. Therefore, it can also be said that the central axis of the cross pipe is preferably at an angle of 60° or more with respect to the head pipe axes.

With the cross pipe being arranged rightward of the left end of the left head pipe and leftward of the right end of the right head pipe, the cross pipe is unlikely to protrude in the vehicle width direction.

With the left curved portion extending leftward from the central portion of the cross pipe toward the left head pipe, and the right curved portion extending rightward from the central portion of the cross pipe toward the right head pipe, the left curved portion and the right curved portion are likely to be compact.

The canister is a relatively large-sized component. By arranging the canister so as to be located between the left head pipe and the right head pipe of the link member, it is possible to effectively utilize the space around the link member, and it is possible to reduce the influence on the design, etc., as compared with cases where the canister is arranged in other locations.

An embodiment provides a straddled vehicle having a unit swing-type engine, with which it is possible to suppress the outward protrusion of the link member while ensuring the torsional rigidity of the link member that connects together the frame and the unit swing-type engine.

### BRIEF DESCRIPTION OF THE DRAWINGS

FIG. **1** is a side view schematically showing a straddled vehicle (scooter-type motorcycle) **1** according to an embodiment.
FIG. **2** is a side view schematically showing a body frame **2** of the motorcycle **1.**
FIG. **3** is a top view schematically showing a link member **30** of the motorcycle **1.**
FIG. **4** is a bottom view schematically showing the link member **30.**
FIG. **5** is a left side view schematically showing the link member **30.**
FIG. **6** is a cross-sectional view taken along line 6A-6A' of FIG. **2****.**
FIG. **7** is a cross-sectional view taken along line 7A-7A' of FIG. **2****.**
FIGS. **8A** and **8B** are cross-sectional views, taken along line 8A-8A' and line 8B-8B' of FIG. **4****,** respectively, showing the cross-sectional shapes of a cross pipe **33** at a first end **33a** and a second end **33b** of the cross pipe **33** (the cross-sectional shapes of a left curved portion **33L** and a right curved portion **33R).**
FIG. **9** is a diagram showing another example configuration of bushes **31c** and **32c** of a left head pipe **31** and a right head pipe **32.**
FIG. **10** is a diagram showing a preferred example arrangement of a canister **80.**
FIG. **11** is a diagram showing a link member (suspension link) **930** used in a scooter-type motorcycle of Patent Document No. 1.

### DETAILED DESCRIPTION

An embodiment will now be described with reference to the drawings. Note that the present invention is not limited to the following embodiment.

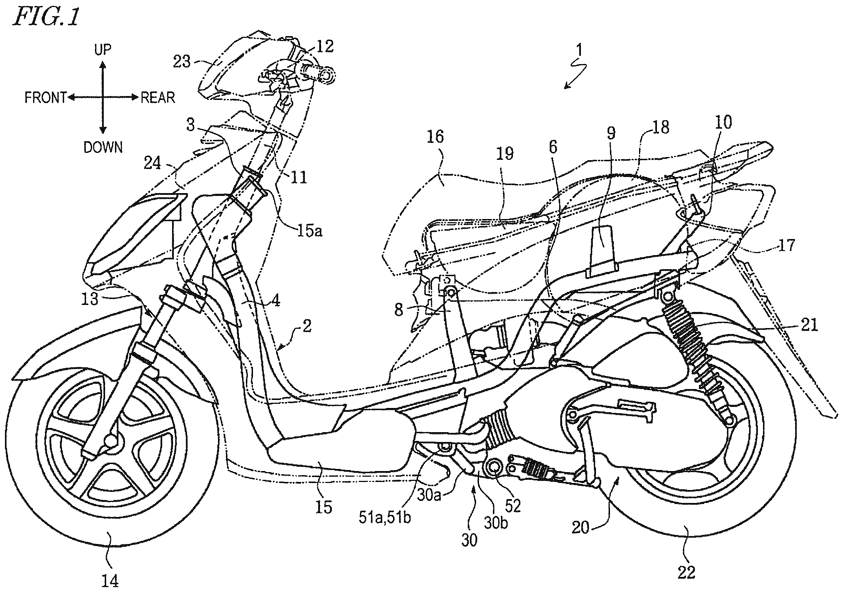

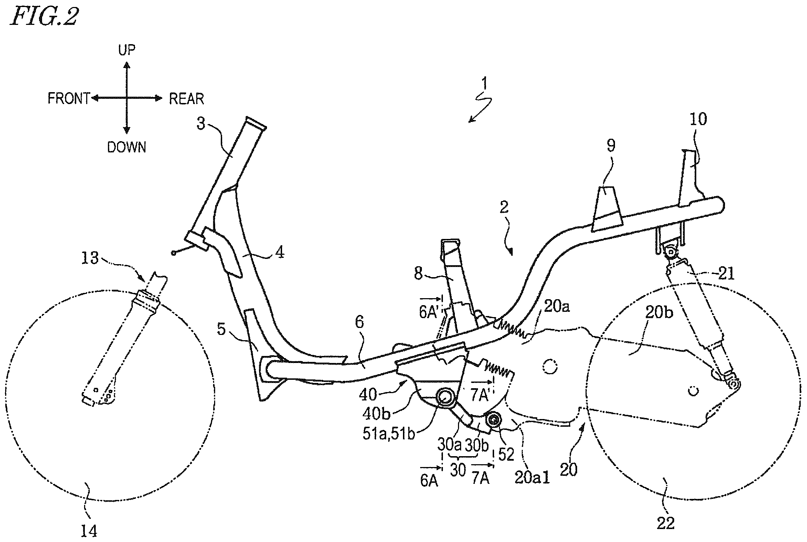

Referring to FIG. **1** and FIG. **2****,** a straddled vehicle **1** according to an embodiment will be described. Herein, the straddled vehicle **1** is a scooter-type motorcycle. FIG. **1** is a side view schematically showing the motorcycle **1.** FIG. **2** is a side view schematically showing the body frame **2** of the motorcycle **1.**

As shown in FIG. **1****,** the motorcycle **1** includes a body frame (hereinafter referred to simply as the "frame") **2,** an unit swing-type engine **20,** and a link member **30** that connects together the frame **2** and the unit swing-type engine **20.**

As shown in FIG. **1** and FIG. **2****,** the frame **2** includes a head pipe **3,** a down tube **4** extending rearward and downward from the head pipe **3,** and a pair of, left and right, back stays **6** that are extending rearward from and connected to the down tube **4** via a connection plate **5.**

A steering shaft **11** is inserted into the head pipe **3** so that the steering shaft **11** can rotate left and right. An upper portion of the steering shaft **11** is connected to a handle **12.** A lower portion of the steering shaft **11** is connected to a front fork **13.** The front fork **13** rotatably supports a front wheel **14**.

A fuel tank **15** is arranged to lie along the area extending from the head pipe **3** to the down tube **4** and further to a front (left side) portion of the back stay **6.** A fuel port **15a** is provided at the top of the fuel tank **15.** The fuel port **15a** is located near the head pipe **3.**

Seat support stays **8, 9** and **10** are connected to the pair of back stays **6.** A seat **16** is supported by the seat support stays **8, 9** and **10.** A storage box **17** is provided below the seat **16.** For example, helmets **18** and **19** are stored in the storage box **17.**

A front portion of the unit swing-type engine **20** is swingably supported on a front portion of the pair of back stays **6** via the link member **30.** A rear portion of the unit swing-type engine **20** is supported on a rear portion of the pair of back stays **6** via a rear cushion **21.** The unit swing-type engine **20** rotatably supports a rear wheel **22.**

The unit swing-type engine **20** is a power unit including an engine **20a** and a power transmission mechanism **20b.** The power of the engine **20a** is transmitted to the rear wheel **22** via the power transmission mechanism **20b.**

A headlight cover **23** is attached to the handle **12.** The head pipe **3,** the down tube **4,** the pair of back stays **6,** etc., of the frame **2** are covered by a body cover **24.**

The link member **30** links together body-side shafts **51a** and **51b** and an engine-side shaft **52.** The body-side shafts **51a** and **51b** are supported by brackets **40** and **41** (the right bracket **41** is not shown) attached to the back stays **6.** The engine-side shaft **52** is supported on a crank case **20a1** of the engine **20a.**

The link member **30** includes a body-side link **30a** that is linked to the body-side shafts **51a** and **51b,** and an engine-side link **30b** that is linked to the engine-side shaft **52.** The body-side link **30a** and the engine-side link **30b** are attached (e.g., welded) together.

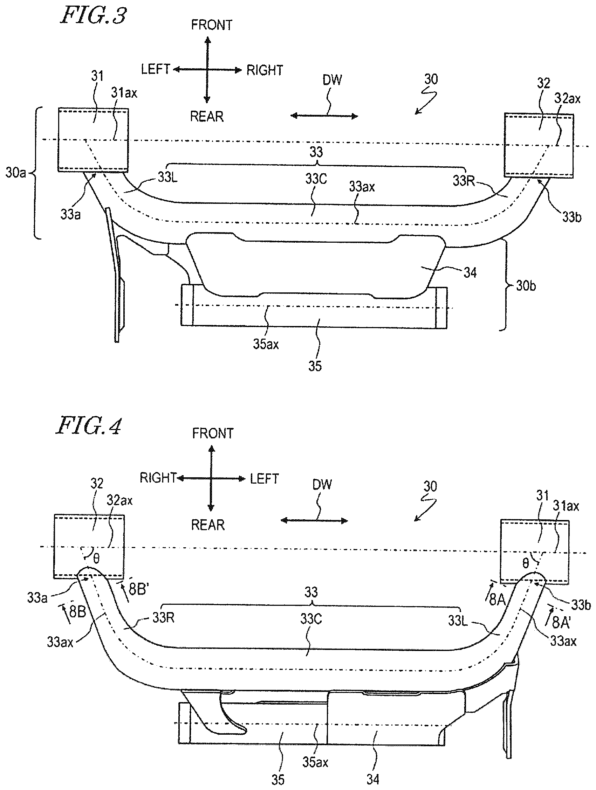

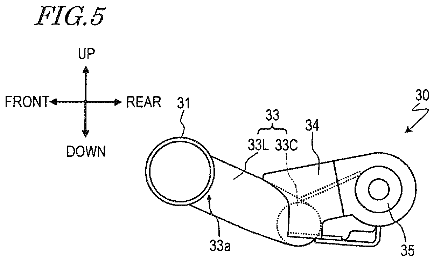

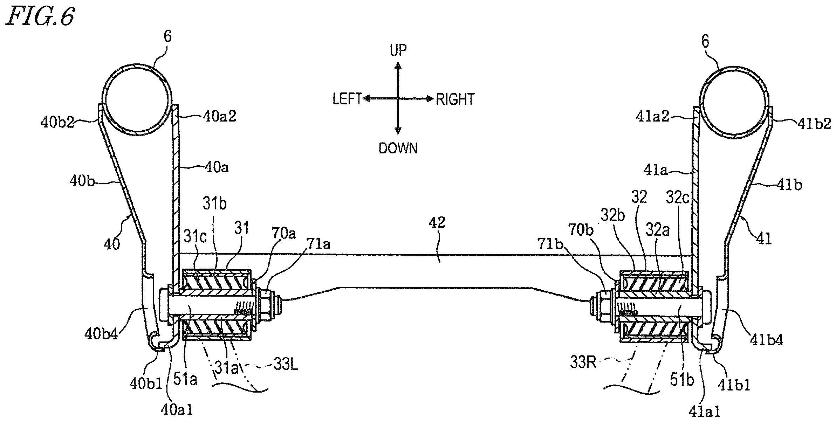

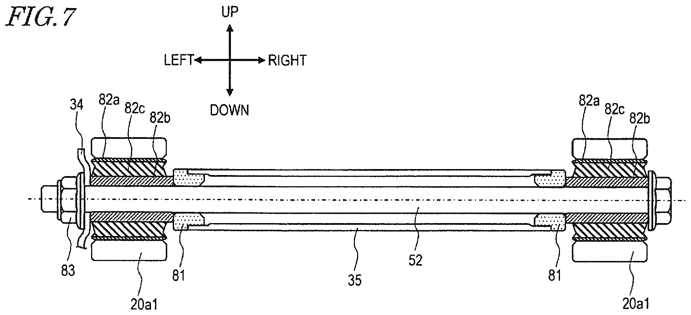

Now, referring also to FIG. **3** to FIG. **7****,** the structure of the link member **30** will be described. FIG. **3,** FIG. **4** and FIG. **5** are a top view, a bottom view and a left side view, respectively, showing the link member **30.** FIG. **6** and FIG. **7** are cross-sectional views taken along line 6A-6A' and line 7A-7A', respectively, of FIG. **2****.**

As shown in FIG. **3,** FIG. **4** and FIG. **5****,** the link member **30** includes a pair of head pipes **31** and **32,** a cross pipe **33,** a connection plate **34,** and an engine-side pipe **35.** The pair of head pipes **31** and **32** and the cross pipe **33** together form the body-side link **30a.** The connection plate **34** and the engine-side pipe **35** together form the engine-side link **30b.**

The head pipe **31,** of the pair of head pipes **31** and **32,** which is located on the left side, will be referred to also as the "left head pipe", and the head pipe **32,** which is located on the right side, will be referred to also as the "right head pipe".

The left head pipe **31** and the right head pipe **32** are each rotatably supported on the frame **2.** The left head pipe **31** and the right head pipe **32** are spaced apart from each other in the vehicle width direction (hereinafter referred to also as the "first direction") **DW.** The axes (hereinafter referred to as the "head pipe axes") **31ax** and **32ax** of the left head pipe **31** and the right head pipe **32** extend in the vehicle width direction **DW.** The head pipe axes **31ax** and **32ax** of the left head pipe **31** and the right head pipe **32** are coaxial with each other.

The first end **33a** of the cross pipe **33** is connected to the left head pipe **31.** The second end **33b** of the cross pipe **33** is connected to the right head pipe **32.** The cross pipe **33** is arranged rightward of the left end of the left head pipe **31** and leftward of the right end of the right head pipe **32.**

The cross pipe **33** includes a central portion **33C,** a left curved portion **33L** and a right curved portion **33R.** The central axis **33ax** of the central portion **33C** extends in the vehicle width direction **DW** at a distance from the head pipe axes **31ax** and **32ax.** That is, the central portion **33C** is a straight portion that extends generally in parallel to the vehicle width direction **DW.**

The left curved portion **33L** includes the first end **33a** of the cross pipe **33,** and extends from the central portion **33C** to the left head pipe **31.** More specifically, the left curved portion **33L** extends leftward from the left end of the central portion **33C** toward the left head pipe **31.**

The right curved portion **33R** includes the second end **33b** of the cross pipe **33,** and extends from the central portion **33C** to the right head pipe **32.** More specifically, the right curved portion **33R** extends rightward from the right end of the central portion **33C** toward the right head pipe **32.**

The body-side link **30a,** including the left head pipe **31,** the right head pipe **32** and the cross pipe **33,** is linked to the body-side shafts **51a** and **51b** supported on the brackets **40** and **41** as shown in FIG. **6****.**

The brackets **40** and **41** are fixed respectively to the pair of back stays **6,** and extend downward. The brackets **40** and **41** are linked together by a cross member **42.**

The left bracket **40** includes an inner plate **40a** and an outer plate **40b.** Peripheral bent portions **40a1** and **40b1** of the inner plate **40a** and the outer plate **40b** are attached together. Peripheral non-bent attachment portions **40a2** and **40b2** of the inner plate **40a** and the outer plate **40b** are attached to a corresponding one (i.e., the left one) of the back stays **6.**

Similarly, the right bracket **41** includes an inner plate **41a** and an outer plate **41b.** Peripheral bent portions **41a1** and **41b1** of the inner plate **41a** and the outer plate **41b** are attached together. Peripheral non-bent attachment portions **41a2** and **41b2** of the inner plate **41a** and the outer plate **41b** are attached to a corresponding one (i.e., the right one) of the back stays **6.**

The left head pipe **31** includes an inner tube portion **31a** that is located on the inner side in the radial direction, an outer tube portion **31b** that is located on the outer side in the radial direction, and a bush **31c** that is arranged between the inner tube portion **31a** and the outer tube portion **31b.** The bush **31c** has a tubular shape and is made of rubber, for example. A bolt as the body-side shaft **51a** is inserted through the inner plate **40a** and the inner tube portion **31a** of the left head pipe **31** via an attachment hole **40b4** of the bracket **40,** and is fastened by a nut **71a** with a washer **70a** therebetween.

Similarly, the right head pipe **32** includes an inner tube portion **32a** that is located on the inner side in the radial direction, an outer tube portion **32b** that is located on the outer side in the radial direction, and a bush **32c** that is arranged between the inner tube portion **32a** and the outer tube portion **32b.** The bush **32c** has a tubular shape and is made of rubber, for example. A bolt as the body-side shaft **51b** is inserted through the inner plate **41a** and the inner tube portion **32a** of the right head pipe **32** via an attachment hole **41b4** of the bracket **41,** and is fastened by a nut **71b** with a washer **70b** therebetween.

The connection plate **34** connects together the cross pipe **33** and the engine-side pipe **35.** Specifically, the connection plate **34** and the cross pipe **33** are attached (e.g., welded) together, and the connection plate **34** and the engine-side pipe **35** are attached (e.g., welded) together. Note that the specific shape of the connection plate **34** is not limited to the illustrated example.

The central axis **35ax** of the engine-side pipe **35** extends in the vehicle width direction **DW** at a distance from the head pipe axes **31ax** and **32ax** and the central axis **33ax** of the cross pipe **33.**

The engine-side link **30b,** including the connection plate **34** and the engine-side pipe **35,** is linked to the engine-side shaft **52** supported on the crank case **20a1.**

As shown in FIG. **7****,** collars **81** are press-fit into the opposite end portions of the engine-side pipe **35,** and the engine-side shaft **52** is inserted into the engine-side pipe **35** through the collars **81.** A pair of bushes **82c,** each of which is integrated with an inner tube portion **82b** and an outer tube portion **82a,** are provided at positions of the crank case **20a1** that are on the outer side of the opposite end portions of the engine-side pipe **35,** and the engine-side shaft **52** is supported on the crank case **20a1** via the bushes **82c.** A bolt as the engine-side shaft **52** is fastened by a nut **83.** In the illustrated example, a portion of the connection plate **34** is interposed between the nut **83** and the crank case **20a1** (the left bush **82c).**

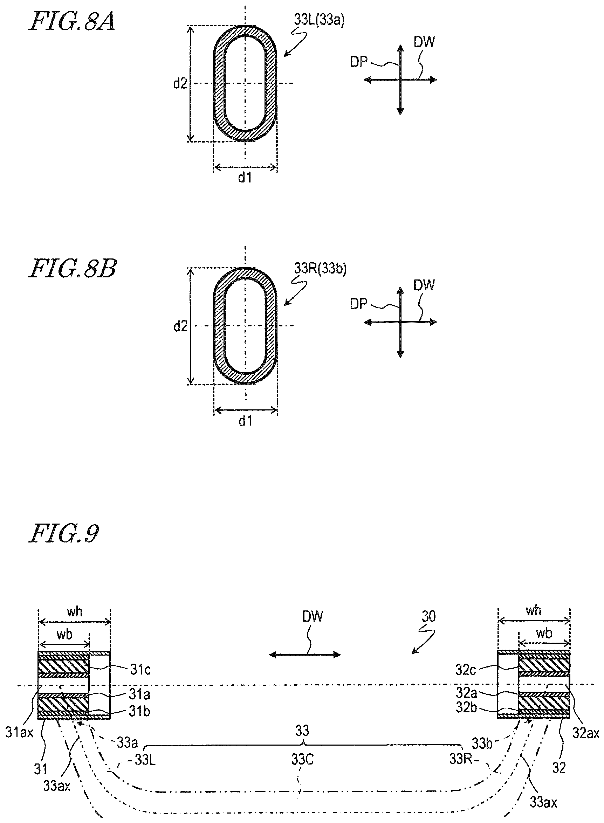

FIGS. **8A** and **8B** show the cross-sectional shape of the cross pipe **33** at the first end **33a** and the second end **33b** (the cross-sectional shape of the left curved portion **33L** and the right curved portion **33R).** FIGS. **8A** and **8B** are cross-sectional views taken along line 8A-8A' and line 8B-8B', respectively, of FIG. **4****.**

Herein, the dimension of the cross pipe **33** (more specifically, of the left curved portion **33L** and the right curved portion **33R)** in the vehicle width direction (first direction) **DW** is denoted as **"d1",** and the dimension thereof in the direction (hereinafter referred to also as the "second direction") **DP** perpendicular to the vehicle width direction **DW** as **"d2".** Note that the second direction **DP** is perpendicular to the vehicle width direction **DW** and is also perpendicular to the central axis **33ax** of the cross pipe **33.** As shown in FIGS. **8A** and **8B****,** the dimension **d2** is larger than the dimension **d1** at the first end **33a** and the second end **33b** of the cross pipe **33.** That is, the cross-sectional shape of the first end **33a** and the second end **33b** of the cross pipe **33** has a higher flat rate than a perfect circle (a generally elliptical shape).

As shown in FIG. **3** and FIG. **4****,** at the first end **33a** and the second end **33b** of the cross pipe **33,** the central axis **33ax** of the cross pipe **33** diagonally crosses (i.e., not perpendicular to) the head pipe axes **31ax** and **32ax.**

As described above, with the link member **30** of the motorcycle (straddled vehicle) **1** of the present embodiment, the central axis **33ax** of the cross pipe **33** diagonally crosses the head pipe axes **31ax** and **32ax** at the first end **33a** and the second end **33b** of the cross pipe **33.** That is, the left curved portion **33L** and the right curved portion **33R** of the cross pipe **33** are connected diagonally to the respective head pipes **31** and **32.** Therefore, as compared with a case where the central axis **933ax** of the cross pipe **933** is perpendicular to the head pipe axes **931ax** and **932ax,** i.e., where the left curved portion **933L** and the right curved portion **933R** are connected perpendicular to the respective head pipes **931** and **932,** as in Patent Document No. 1, the left curved portion **33L** and the right curved portion **33R** are likely to be located on the inner side (i.e., unlikely to protrude outwardly), thereby improving the degree of freedom with the shape of the cross pipe **33.** This makes it easier to ensure the ease of layout and installment of peripheral components, thereby making it easier to ensure a large installment interval between the left head pipe **31** and the right head pipe **32** and to ensure the torsional rigidity of the link member **30.**

Note that when the left curved portion **33L** and the right curved portion **33R** of the cross pipe 33 are connected diagonally to the respective head pipes **31** and **32,** the dimension **d1** in the vehicle width direction **DW** of the end portion of the cross pipe **33** as projected onto the outer surface of the head pipes **31** and **32** increases, and one may think that it may be necessary to also increase the head pipe width. With the link member **30** of the present embodiment, however, the dimension **d2** in the direction **DP** perpendicular to the vehicle width direction **DW** is larger than the dimension **d1** in the vehicle width direction **DW** at the first end **33a** and the second end **33b** of the cross pipe **33.** That is, the first end **33a** and the second end **33b** of the cross pipe **33** are deformed (flattened) so that the dimension **d2** is larger than the dimension **d1.** Therefore, it is possible to prevent an increase in the head pipe width even when the left curved portion **33L** and the right curved portion **33R** of the cross pipe **33** are connected diagonally to the respective head pipes **31** and **32.** That is, the head pipe width can be made smaller as compared with a case where the first end **33a** and the second end **33b** of the cross pipe **33** are connected diagonally to the head pipes **31** and **32** without being deformed (flattened).

Note that the embodiment illustrated herein is directed to a case where the dimension **d2** is larger than the dimension **d1** and the central axis **33ax** of the cross pipe **33** diagonally crosses the head pipe axes **31ax** and **32ax** at both of the first end **33a** and the second end **33b** of the cross pipe **33.** However, the configuration described above may be employed at only one of the first end **33a** and the second end **33b** of the cross pipe **33.** That is, the advantageous effects are realized when the dimension **d2** is larger than the dimension **d1** and the central axis **33ax** of the cross pipe **33** diagonally crosses the head pipe axes **31ax** and **32ax** at at least one of the first end **33a** and the second end **33b** of the cross pipe **33.**

In order to sufficiently prevent an increase in the head pipe width, the ratio of the dimension **d2** with respect to the dimension **d1** at the first end **33a** and/or the second end **33b** of the cross pipe **33** is preferably 1.2 or more.

In order to reduce the outward protrusion of the left curved portion **33L** and/or the right curved portion **33R** of the cross pipe **33,** the central axis **33ax** of the cross pipe **33** is preferably at an angle of 85° or less with respect to the head pipe axes **31ax** and **32ax** at the first end **33a** and/or the second end **33b** of the cross pipe **33.** Note however that if the angle of the central axis **33ax** of the cross pipe **33** with respect to the head pipe axes **31ax** and **32ax** (angle θ in FIG. **4****)** is less than 60°, it may be difficult to connect (e.g., to weld with a welding torch) the cross pipe **33** to the head pipes **31** and **32.** Therefore, it can also be said that the central axis **33ax** of the cross pipe **33** is preferably at an angle of 60° or more with respect to the head pipe axes **31ax** and **32ax.**

The cross pipe **33** is preferably arranged rightward of the left end of the left head pipe **31** and leftward of the right end of the right head pipe **32** as shown in FIG. **3****,** etc. Then, the cross pipe **33** is unlikely to protrude in the vehicle width direction **DW.**

It is preferred that the left curved portion **33L** extends leftward from the central portion **33C** of the cross pipe **33** toward the left head pipe **31,** and the right curved portion **33R** extends rightward from the central portion **33C** of the cross pipe **33** toward the right head pipe **32.** Then, the left curved portion **33L** and the right curved portion **33R** are likely to be compact.

Now, a preferred configuration of the bushes **31c** and **32c** of the left head pipe **31** and the right head pipe **32** will be described. FIG. **9** shows another example configuration of the bushes **31c** and **32c.**

In the example shown in FIG. **6****,** the width of the bushes **31c** and **32c** is the same as the width of the head pipes **31** and **32.** In contrast, in the example shown in FIG. **9****,** the width **wb** of the bushes **31c** and **32c** of the left head pipe **31** and the right head pipe **32** is smaller than the width **wh** of the corresponding head pipes **31** and **32.** Thus, in view of cost and weight reduction, it is preferred that the width **wb** of the bushes **31c** and **32c** of the head pipes **31** and **32,** to which the cross pipe **33** is connected diagonally, is smaller than the width **wh** of the head pipes **31** and **32** (i.e., the bushes **31c** and **32c** are offset).

It is also preferred that the bushes **31c** and **32c** are located on the central axis **33ax** of the cross pipe **33** as shown in FIG. **9****.** With the bushes **31c** and **32c** being located on the central axis **33ax** of the cross pipe **33,** vibrations from the unit swing-type engine **20** can be desirably absorbed by the bushes **31c** and **32c.**

Moreover, as illustrated in FIG. **9****,** as the bushes **31c** and **32c** are outwardly biased in the head pipes **31** and **32** in the vehicle width direction **DW,** the moment arm increases, thereby decreasing the load on the bushes **31c** and **32c.**

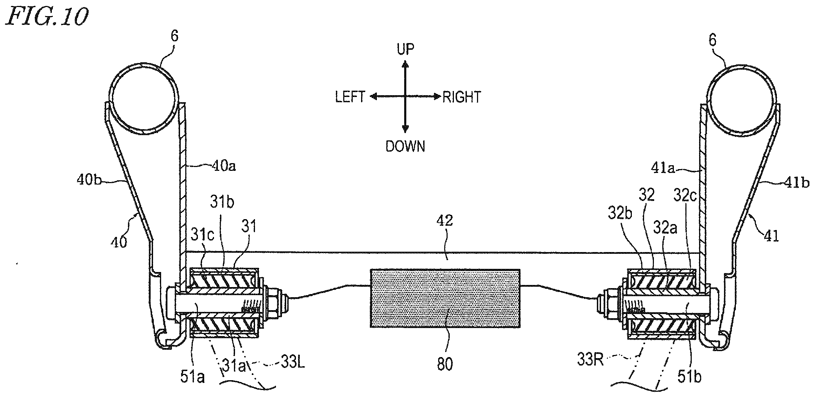

Now, referring to FIG. **10****,** a preferred example arrangement of a canister **80** will be described. The canister **80** is used to reservoir fuel that has been evaporated in the fuel tank **15.** Note that the outer shape of the canister **80** is simplified in FIG. **10****.**

As shown in FIG. **10****,** the canister **80** is arranged so as to be located between the left head pipe **31** and the right head pipe **32** of the link member **30.** In the example shown in FIG. **10****,** the canister **80** is fastened to the cross member **42** that links together the brackets **40** and **41.**

Conventionally, the canister **80** is often provided inside the front cover (the front portion of the body cover **24),** in the vicinity of the fuel tank **15,** or in the vicinity of the storage box **17.** Since the canister **80** is a relatively large-sized component, it in some cases influences the design, the tank capacity and the box capacity. In contrast, by arranging the canister **80** so as to be located between the left head pipe **31** and the right head pipe **32** of the link member **30,** it is possible to effectively utilize the space around the link member **30,** and it is also possible to reduce the influence on the design, etc., as compared with cases where the canister **80** is arranged in other locations.

Note that although the scooter-type motorcycle **1** has been illustrated as a straddled vehicle in the present embodiment, the embodiment is not limited to this. The embodiment is generally applicable to straddled vehicles having a unit swing-type engine.

As described above, the straddled vehicle **1** according to an embodiment is the straddled vehicle **1** including: the frame **2;** the unit swing-type engine **20;** and the link member **30** that connects together the frame **2** and the unit swing-type engine **20,** wherein: the link member **30** includes: the left head pipe **31** rotatably supported on the frame **2;** the right head pipe **32** rotatably supported on the frame **2;** and the cross pipe **33** having the first end **33a** thereof connected to the left head pipe **31** and the second end **33b** thereof connected to the right head pipe **32;** the left head pipe **31** and the right head pipe **32** are spaced apart from each other in the vehicle width direction **DW,** and the head pipe axes **31ax** and **32ax** of the left head pipe **31** and the right head pipe **32** extend in the vehicle width direction **DW** and are coaxial with each other; the cross pipe **33** includes: the central portion **33C** whose central axis **33ax** extends in the vehicle width direction **DW at** a distance from the head pipe axes **31ax** and **32ax;** the left curved portion **33L** including the first end **33a** and extending from the central portion **33C** to the left head pipe **31;** and the right curved portion **33R** including the second end **33b** and extending from the central portion **33C** to the right head pipe **32;** and at at least one of the first end **33a** and the second end **33b** of the cross pipe **33,** the dimension **d2** of the cross pipe **33** in the direction **DP** perpendicular to the vehicle width direction **DW** is larger than the dimension **d1** thereof in the vehicle width direction **DW,** and the central axis **33ax** of the cross pipe **33** diagonally crosses the head pipe axes **31ax** and **32ax.**

With the link member **30** of the straddled vehicle **1** according to an embodiment, the central axis **33ax** of the cross pipe **33** diagonally crosses the head pipe axes **31ax** and **32ax** at at least one of the first end **33a** and the second end **33b** of the cross pipe **33.** That is, the left curved portion **33L** and/or the right curved portion **33R** of the cross pipe **33** are connected diagonally to the respective head pipes **31** and **32.** Therefore, as compared with a case where the central axis **33ax** of the cross pipe **33** is perpendicular to the head pipe axes **31ax** and **32ax,** i.e., where the left curved portion **33L** and/or the right curved portion **33R** are connected perpendicular to the respective head pipes **31** and **32,** the left curved portion **33L** and/or the right curved portion **33R** are likely to be located on the inner side (i.e., unlikely to protrude toward the outside), thereby improving the degree of freedom with the shape of the cross pipe **33.** This makes it easier to ensure the ease of layout and installment of peripheral components, thereby making it easier to ensure a large installment interval between the left head pipe **31** and the right head pipe **32** and to ensure the torsional rigidity of the link member **30.**

Note that when the left curved portion **33L** and/or the right curved portion **33R** of the cross pipe **33** are connected diagonally to the respective head pipes **31** and **32,** the dimension **d1** in the vehicle width direction **DW** of the end portion of the cross pipe **33** as projected onto the outer surface of the head pipes **31** and **32** increases, and one may think that it may be necessary to also increase the head pipe width. With the link member **30** of the embodiment, however, the dimension **d2** in the direction **DP** perpendicular to the vehicle width direction **DW** is larger than the dimension **d1** in the vehicle width direction **DW** at at least one of the first end **33a** and the second end **33b** of the cross pipe **33.** That is, the first end **33a** and/or the second end **33b** of the cross pipe **33** are deformed (flattened) so that the dimension **d2** is larger than the dimension **d1.** Therefore, it is possible to prevent an increase in the head pipe width even when the left curved portion **33L** and/or the right curved portion **33R** of the cross pipe **33** are connected diagonally to the respective head pipes **31** and **32.** That is, the head pipe width can be made smaller as compared with a case where the first end **33a** and/or the second end **33b** of the cross pipe **33** are connected diagonally to the head pipes **31** and **32** without being deformed (flattened).

In one embodiment, each of the left head pipe **31** and the right head pipe **32** includes the bush **31c, 32c** arranged between the inner tube portion **31a, 32a** and the outer tube portion 31b, **32b,** and the bush **31c, 32c** is located on the central axis **33ax** of the cross pipe **33.**

With the bushes **31c** and **32c** being located on the central axis **33ax** of the cross pipe **33,** vibrations from the unit swing-type engine **20** can be desirably absorbed by the bushes **31c** and **32c.**

In one embodiment, the width of the bush **31c, 32c** of one of the left head pipe **31** and the right head pipe **32** that corresponds to at least one of the first end **33a** and the second end **33b** of the cross pipe **33** is smaller than the width of the one of the head pipes **31** and **32.**

In view of cost and weight reduction, it is preferred that the width of the bushes **31c** and **32c** of the head pipes **31** and **32,** to which the cross pipe **33** is connected diagonally, is smaller than the width of the head pipes **31** and **32** (i.e., the bushes **31c** and **32c** are offset).

In one embodiment, the ratio of the dimension **d2** with respect to the dimension **d1** is 1.2 or more at at least one of the first end **33a** and the second end **33b** of the cross pipe **33.**

In order to sufficiently prevent an increase in the head pipe width, the ratio of the dimension **d2** with respect to the dimension **d1** the first end **33a** and/or the second end **33b** of the cross pipe **33** is preferably 1.2 or more.

In one embodiment, at at least one of the first end **33a** and the second end **33b** of the cross pipe **33,** the central axis **33ax** of the cross pipe **33** is at an angle of 60° or more and 85° or less with respect to the head pipe axis **31ax.**

In order to reduce the outward protrusion of the left curved portion **33L** and/or the right curved portion **33R** of the cross pipe **33,** the central axis **33ax** of the cross pipe **33** is preferably at an angle of 85° or less with respect to the head pipe axis **31ax** at the first end **33a** and/or the second end **33b** of the cross pipe **33.** Note however that if the angle of the central axis **33ax** of the cross pipe **33** with respect to the head pipe axis **31ax** is less than 60°, it may be difficult to connect (e.g., to weld with a welding torch) the cross pipe **33** to the head pipes **31** and **32.** Therefore, it can also be said that the central axis **33ax** of the cross pipe **33** is preferably at an angle of 60° or more with respect to the head pipe axis **31ax.**

In one embodiment, the cross pipe **33** is arranged rightward of the left end of the left head pipe **31** and leftward of the right end of the right head pipe **32.**

With the cross pipe **33** being arranged rightward of the left end of the left head pipe **31** and leftward of the right end of the right head pipe **32,** the cross pipe **33** is unlikely to protrude in the vehicle width direction **DW.**

In one embodiment, the left curved portion **33L** extends leftward from the central portion **33C** of the cross pipe **33** toward the left head pipe **31,** and the right curved portion **33R** extends rightward from the central portion **33C** of the cross pipe **33** toward the right head pipe **32.**

With the left curved portion **33L** extending leftward from the central portion **33C** of the cross pipe **33** toward the left head pipe **31,** and the right curved portion **33R** extending rightward from the central portion **33C** of the cross pipe **33** toward the right head pipe **32,** the left curved portion **33L** and the right curved portion **33R** are likely to be compact.

In one embodiment, the straddled vehicle **1** further includes the canister **80** arranged so as to be located between the left head pipe **31** and the right head pipe **32** of the link member **30.**

The canister **80** is a relatively large-sized component. By arranging the canister **80** so as to be located between the left head pipe **31** and the right head pipe **32** of the link member **30,** it is possible to effectively utilize the space around the link member **30,** and it is possible to reduce the influence on the design, etc., as compared with cases where the canister **80** is arranged in other locations.

An embodiment provides a straddled vehicle having a unit swing-type engine, with which it is possible to suppress the outward protrusion of the link member while ensuring the torsional rigidity of the link member that connects together the frame and the unit swing-type engine.

## Claims

1. A straddled vehicle (1) comprising:
a frame (2);
a unit swing-type engine (20); and
a link member (30) that connects together the frame (2) and the unit swing-type engine (20), wherein:
the link member (30) includes:
a left head pipe (31) rotatably supported on the frame (2);
a right head pipe (32) rotatably supported on the frame (2); and
a cross pipe (33) having a first end (33a) thereof connected to the left head pipe (31) and a second end (33b) thereof connected to the right head pipe (32);
the left head pipe (31) and the right head pipe (32) are spaced apart from each other in a vehicle width direction (DW), and head pipe axes (31ax, 32ax) of the left head pipe (31) and the right head pipe (32) extend in the vehicle width direction (DW) and are coaxial with each other;
the cross pipe (33) includes:
a central portion (33C) whose central axis (33ax) extends in the vehicle width direction (DW) at a distance from the head pipe axes (31ax, 32ax);
a left curved portion (33L) including the first end (33a) and extending from the central portion (33C) to the left head pipe (31); and
a right curved portion (33R) including the second end (33b) and extending from the central portion (33C) to the right head pipe (32); and is **characterized in that**
at at least one of the first end (33a) and the second end (33b) of the cross pipe (33), a dimension **d2** of the cross pipe (33) in a direction perpendicular to the vehicle width direction (DW) is larger than a dimension **d1** thereof in the vehicle width direction (DW), and the central axis (33ax) of the cross pipe (33) diagonally crosses the head pipe axes (31ax, 32ax).

2. The straddled vehicle (1) according to claim 1, wherein:
each of the left head pipe (31) and the right head pipe (32) includes an inner tube portion (31a) and an outer tube portion (31b), and a bush (31c) arranged between the inner tube portion (31a) and the outer tube portion (31b); and
the bush (31c) is located on the central axis (33ax) of the cross pipe (33).

3. The straddled vehicle (1) according to claim 2, wherein a width of the bush (31c) of one of the left head pipe (31) and the right head pipe (32) that corresponds to at least one of the first end (33a) and the second end (33b) of the cross pipe (33) is smaller than a width of the one of the left head pipe (31) and the right head pipe (32).

4. The straddled vehicle (1) according to any one of claims 1 to 3, wherein at the at least one of the first end (33a) and the second end (33b) of the cross pipe (33), a ratio of the dimension **d2** with respect to the dimension **d1** is 1.2 or more.

5. The straddled vehicle (1) according to any one of claims 1 to 4, wherein at the at least one of the first end (33a) and the second end (33b) of the cross pipe (33), the central axis (33ax) of the cross pipe (33) is at an angle of 60° or more and 85° or less with respect to the head pipe axes (31ax, 32ax).

6. The straddled vehicle (1) according to any one of claims 1 to 5, wherein the cross pipe (33) is arranged rightward of a left end of the left head pipe (31) and leftward of a right end of the right head pipe (32).

7. The straddled vehicle (1) according to any one of claims 1 to 6, wherein:
the left curved portion (33L) extends leftward from the central portion (33C) of the cross pipe (33) toward the left head pipe (31); and
the right curved portion (33R) extends rightward from the central portion (33C) of the cross pipe (33) toward the right head pipe (32).

8. The straddled vehicle (1) according to any one of claims 1 to 7, further comprising a canister (80) arranged so as to be located between the left head pipe (31) and the right head pipe (32) of the link member (30).

## Patentansprüche

1. Spreizsitz-Fahrzeug (1), das umfasst:
einen Rahmen (2);
eine Triebsatzschwinge (20); sowie
ein Verbindungsglied (30), das den Rahmen (2) und die Triebsatzschwinge (20) miteinander verbindet, wobei
das Verbindungsglied (30) enthält:
ein linkes Steuerrohr (31), das drehbar an dem Rahmen (2) gelagert ist;
ein rechtes Steuerrohr (32), das drehbar an dem Rahmen (2) gelagert ist; und
ein Querrohr (33), dessen erstes Ende (33a) mit dem linken Steuerrohr (31) verbunden ist und dessen zweites Ende (33b) mit dem rechten Steuerrohr (32) verbunden ist;
das linke Steuerrohr (31) und das rechte Steuerrohr (32) in einer Fahrzeug-Breitenrichtung (DW) voneinander beabstandet sind, und Steuerrohr-Achsen (31 ax, 32ax) des linken Steuerrohrs (31) und des rechten Steuerrohrs (32) in der Fahrzeug-Breitenrichtung (DW) verlaufen und koaxial zueinander sind;
wobei das Querrohr (33) enthält:
einen mittigen Abschnitt (33C), dessen Mittelachse (33ax) in der Fahrzeug-Breitenrichtung (DW) in einem Abstand zu den Steuerrohr-Achsen (31ax, 32ax) verläuft;
einen linken gekrümmten Abschnitt (33L), der das erste Ende (33a) einschließt und sich von dem mittigen Abschnitt (33C) zu dem linken Steuerrohr (31) erstreckt; sowie
einen rechten gekrümmten Abschnitt (33R), der das zweite Ende (33b) einschließt und sich von dem mittigen Abschnitt (33C) zu dem rechten Steuerrohr (32) erstreckt; und
**dadurch gekennzeichnet ist, dass**
an dem ersten Ende (33a) oder/und dem zweiten Ende (33b) des Querrohrs (33) eine Abmessung d2 des Querrohrs (33) in einer Richtung senkrecht zu der Fahrzeug-Breitenrichtung (DW) größer ist als eine Abmessung d1 desselben in der Fahrzeug-Breitenrichtung (DW), und die Mittelachse (33ax) des Querrohrs (33) die Steuerrohr-Achsen (31 ax, 32ax) diagonal kreuzt.

2. Spreizsitz-Fahrzeug (1) nach Anspruch 1, wobei:
das linke Steuerrohr (31) und das rechte Steuerrohr (32) jeweils einen inneren Röhrenabschnitt (31a) und einen äußeren Röhrenabschnitt (31b) sowie eine Buchse (31c) einschlie-βen, die zwischen dem inneren Röhrenabschnitt (31a) und dem äußeren Röhrenabschnitt (31b) angeordnet ist; und
die Buchse (31c) sich auf der Mittelachse (33ax) des Querrohrs (33) befindet.

3. Spreizsitz-Fahrzeug (1) nach Anspruch 2, wobei eine Breite der Buchse (31c) des linken Steuerrohrs (31) oder des rechten Steuerrohrs (32), die dem ersten Ende (33a) oder/und dem zweiten Ende (33b) des Querrohrs (33) entspricht, kleiner ist als eine Breite des linken Steuerrohrs (31) oder des rechten Steuerrohrs (32).

4. Spreizsitz-Fahrzeug (1) nach einem der Ansprüche 1 bis 3, wobei an dem ersten Ende (33a) oder/und dem zweiten Ende (33b) des Querrohrs (33) ein Verhältnis der Abmessung d2 in Bezug auf die Abmessung d1 1,2 oder mehr beträgt.

5. Spreizsitz-Fahrzeug (1) nach einem der Ansprüche 1 bis 4, wobei an dem ersten Ende (33a) oder/und dem zweiten Ende (33b) des Querrohrs (33) die Mittelachse (33ax) des Querrohrs (33) in einem Winkel von 60° oder mehr und 85° oder weniger in Bezug auf die Steuerrohr-Achsen (31ax, 32ax) liegt.

6. Spreizsitz-Fahrzeug (1) nach einem der Ansprüche 1 bis 5, wobei das Querrohr (33) rechts von einem linken Ende des linken Steuerrohrs (31) und links von einem rechten Ende des rechten Steuerrohrs (32) angeordnet ist.

7. Spreizsitz-Fahrzeug (1) nach einem der Ansprüche 1 bis 6, wobei:
der linke gekrümmte Abschnitt (33L) sich von dem mittigen Abschnitt (33C) des Querrohrs (33) nach links in Richtung des linken Steuerrohrs (31) erstreckt; und
der rechte gekrümmte Abschnitt (33R) sich von dem mittigen Abschnitt (33C) des Querrohrs (33) nach rechts in Richtung des rechten Steuerrohrs (32) erstreckt.

8. Spreizsitz-Fahrzeug (1) nach einem der Ansprüche 1 bis 7, das des Weiteren einen Behälter (80) umfasst, der so angeordnet ist, dass er sich zwischen dem linken Steuerrohr (31) und dem rechten Steuerrohr (32) des Verbindungsgliedes (30) befindet.

## Revendications

1. Véhicule à chevaucher (1) comprenant :
un châssis (2) ;
un moteur de type oscillant unitaire (20) ; et
un élément de liaison (30) qui relie le châssis (2) et le moteur de type oscillant unitaire (20), où :
l'élément de liaison (30) comprend :
un tuyau de tête gauche (31) supporté de manière rotative sur le cadre (2) ;
un tuyau de tête droit (32) supporté de manière rotative sur le cadre (2) ; et
un tuyau transversal (33) dont une première extrémité (33a) est reliée au tuyau de tête gauche (31) et une seconde extrémité (33b) est reliée au tuyau de tête droit (32) ;
le tuyau de tête gauche (31) et le tuyau de tête droit (32) sont espacés l'un de l'autre dans la direction de la largeur du véhicule (DW), et les axes de tuyau de tête (31ax, 32ax) du tuyau de tête gauche (31) et du tuyau de tête droit (32) s'étendent dans la direction de la largeur du véhicule (DW) et sont coaxiaux entre eux ;
le tuyau transversal (33) comprend :
une partie centrale (33C) dont l'axe central (33ax) s'étend dans la direction de la largeur du véhicule (DW) à une distance des axes de tuyau de tête (31ax, 32ax) ;
une partie courbe gauche (33L) comprenant la première extrémité (33a) et s'étendant de la partie centrale (33C) au tuyau de tête gauche (31) ; et
une partie courbe droite (33R) comprenant la deuxième extrémité (33b) et s'étendant de la partie centrale (33C) au tuyau de tête droit (32) ; et est **caractérisée en ce que**
à au moins l'une des première (33a) et deuxième (33b) extrémités du tuyau transversal (33), une dimension d2 du tuyau transversal (33) dans une direction perpendiculaire à la direction de la largeur du véhicule (DW) est supérieure à une dimension d1 de celui-ci dans la direction de la largeur du véhicule (DW), et l'axe central (33ax) du tuyau transversal (33) croise en diagonale les axes de tuyau de tête (31ax, 32ax).

2. Véhicule à chevaucher (1) selon la revendication 1, où :
le tuyau de tête gauche (31) et tuyau de tête droit (32) comprennent chacun une partie de tuyau intérieure (31a) et une partie de tuyau extérieure (31b), et un manchon (31c) disposé entre la partie de tuyau intérieure (31a) et la partie de tuyau extérieure (31b) ; et
le manchon (31c) est situé sur l'axe central (33ax) du tuyau transversal (33).

3. Véhicule à chevaucher (1) selon la revendication 2, où une largeur du manchon (31c) de l'un des tuyaux de tête gauche (31) et droit (32) qui correspond à au moins l'une de la première extrémité (33a) et de la deuxième extrémité (33b) du tuyau transversal (33) est inférieure à une largeur dudit un des tuyaux de tête gauche (31) et droit (32).

4. Véhicule à chevaucher (1) selon l'une quelconque des revendications 1 à 3, où, à ladite au moins une des première (33a) et deuxième extrémités (33b) du tuyau transversal (33), un rapport entre la dimension d2 et la dimension d1 est de 1,2 ou plus.

5. Véhicule à chevaucher (1) selon l'une quelconque des revendications 1 à 4, où, à ladite au moins une des première (33a) et deuxième (33b) extrémités du tuyau transversal (33), l'axe central (33ax) du tuyau transversal (33) forme un angle de 60° ou plus et de 85° ou moins par rapport aux axes de tuyau de tête (31ax, 32ax).

6. Véhicule à chevaucher (1) selon l'une quelconque des revendications 1 à 5, où le tuyau transversal (33) est disposé à droite d'une extrémité gauche du tuyau de tête gauche (31) et à gauche d'une extrémité droite du tuyau de tête droit (32).

7. Véhicule à chevaucher (1) selon l'une des revendications 1 à 6, où :
la partie courbe gauche (33L) s'étend vers la gauche à partir de la partie centrale (33C) du tuyau transversal (33) vers le tuyau de tête gauche (31) ; et
la partie courbe droite (33R) s'étend vers la droite à partir de la partie centrale (33C) du tuyau transversal (33) vers le tuyau de tête droit (32).

8. Véhicule à chevaucher (1) selon l'une quelconque des revendications 1 à 7, comprenant en outre un réservoir (80) disposé de manière à être situé entre le tuyau de tête gauche (31) et le tuyau de tête droit (32) de l'élément de liaison (30).
